**Europäisches Patentamt**

**European Patent Office**

**Office européen des brevets**

(19)

(11) Publication number : **0 522 777 A1**

## (12) EUROPEAN PATENT APPLICATION

(21) Application number : **92306055.2**

(22) Date of filing : **30.06.92**

(51) Int. Cl.⁵ : **C08J 5/12, C08J 5/24**

(30) Priority : **01.07.91 US 723874**

(43) Date of publication of application :
**13.01.93 Bulletin 93/02**

(84) Designated Contracting States :
**DE ES FR GB IT**

(71) Applicant : **ICI COMPOSITES INC.**
**2055 E. Technology Circle**
**Tempe, Arizona 85043 (US)**

(72) Inventor : **McGourty Lettner, Marie**
**8201 Lake Bend Drive**
**Rowlette TX 75088 (US)**

(74) Representative : **Graham, John George et al**
**ICI Group Patents Services Dept. PO Box 6**
**Shire Park Bessemer Road**
**Welwyn Garden City Herts, AL7 1HD (GB)**

(54) **Intermediate structure of controlled adhesiveness.**

(57)    The present invention is directed to improving shelf life by varying the tackiness of the plies of intermediate laminar structures by applying a resin to the surface of the ply prior to lamination and in line with the manufacturing process.

EP 0 522 777 A1

Background of the Invention

The present invention is directed to controlling and varying the tackiness of intermediate structures such as prepregs and other intermediate type structures.

It is known to those skilled in this art that structures such as prepregs require a tacky outer surface to enable the production of prepreg laminates. A problem in this art has been associated with an uncontrolled tackiness at the laminar interfaces. A lack of tackiness results in laminar structures unable to adhere to each other. Too much tackiness results in difficulties in the manufacture of the laminate structures and potential loss of mechanical properties.

It is known in this art that increasing the heat at the laminar interface will increase tackiness. Often, however, increasing the heat of a ply prior to laminating a structure is undesirable since it may cause resin advancement nor is it easily compatible with manufacturing techniques commonly in practice in this art. Therefore, it is preferable that the solution to the tack problem not involve heat if the problem solved is to be incorporated into those manufacturing processes currently in use. The prohibition of heat is not meant as a limitation to the present invention as it is contemplated that a combination of the present invention and heat may provide advantageous and/or similar results. However, the commercial underpinnings of the present invention strongly favour the absence of heat in the in-line manufacturing process as this invention is applied thereto.

Skilled artisans have attempted modification of the interlaminar interface with additives in attempts to chemically bind the plies one to the other to enhance the interfacial strength. The problem, while resolved in laboratory applications, persisted in the manufacturing arena since the scale ups from the laboratory have either not been compatible with the volumes required for the manufacturing scale up or were not directed to solving the tackiness problem.

The present invention has solved this long felt need in the industry with surprising results. The inventive solution is compatible in a high volume manufacturing process and results in an intermediate product wherein the tackiness of the ply is controllably fixed on the surface. The controllability is a function of spray volume, speed and concentration of the agent effected on the surface of the ply and/or prepreg.

This invention is found useful for making a single and/or a plurality of intermediated ply and/or prepreg structures that can be advantageously used to make laminates for use in the aerospace, marine, land transport, or in any field wherein a light weight strong material can be advantageously used. It has been found that the present invention, while solving the manufacturing problem, produces a final cured laminar structure with undetectable changes in mechanical properties. Advantageously, the solution to this problem can be compatibly introduced into the manufacturing line of laminar structures.

Finally, part of the problem solved with this invention is the shelf life of the intermediate structure. Heretofore, shelf life was, among other variables, dependent upon the life of the tack. The present invention makes tack dependency much less relevant to shelf life as manufacturing processes are presently practised.

Summary of the Invention

An intermediate structure wherein the structure surface is enriched with a tacktifier (defined below). The tacktifier comprises thermoset resin comprising phenolics, epoxies, acrylics, cyanates, imides, methacrylates, esters, and combinations thereof and/or therebetween. The intermediate structure comprises a single and/or plurality of plies of laminates such as but not limited to prepregs. The laminates may be comprised of additivies such as but not limited to chopped and/or continuous fibres, fabrics, whiskers, and fillers such as elastomers, thermoplastics, glass, ceramics, and combinations thereof and therebetween selected from the first, second, and third transition series of the periodic table and their oxides, borides, and/or nitrides. Preferable fibres are comprised of carbon, kevlar, glass and combinations thereof and/or therebetween. Most preferable the fibre is comprised of carbon especially Hercules Incorporated carbon fibre IM7. Preferable phenolic and epoxies thermoset resins are used. Most preferable epoxy resins are used.

The amount of additives combined with the intermediate structure resin may optionally range from about 0 to 80 weight percent. Preferably the additives are combined from about 0 to 50 weight percent. Most preferably additives are combined from about 0 to 30 weight percent.

The enriching of the surface of a laminar ply with thermoset resin may be effected by any means practicable in a manufacturing setting. For the purpose of this invention the additional agent of thermoset resin added to the surface of the ply is defined as a tacktifying agent or simply a tacktifier.

The tacktifier has a viscosity of from 500 to 1500 centipoise, preferable 500 to 1000. The tacktifier has been observed to penetrate the thickness of a unidirectional tape. Preferably, the tacktifier penetrates one micron or less of the surface, most preferably 200 angstroms or less. Specific means for delivering the tacktifier are for example, but not limited to, methods of coating, spraying, doctor blading, extruding, transfer coating, dipping, and combinations thereof and/or therebetween. Preferably spraying and transfer coating are used. Most preferably spraying is used.

In its most general form, the process for combining tacktifier with the ply is to transfer the tacktifier onto the surface of the ply by any means of transferring. Preferably the application of the tacktifier is in the form of wet spray. Most preferably the wet spray application is combined with a single and/or plurality of plies during the manufacture of the laminar structure. More specifically, the intermediate structure is modified by the application of the tacktifier to surfaces of said structure. Either or both plies of the intermediate structure can be treated with the tacktifier. The modification of the surface comprises the process of providing an intermediate structure as a substrate, providing a transferring means, as known to those skilled in this art, and transferring the tacktifier onto the surface of the substrate whereby the tacktifier adheres to the substrate. Preferably the transferring means is placed into the line of the existing or newly created manufacturing line. Most preferably, a spraying means is placed into the line of the existing or newly created manufacturing line.

Importantly, the invention disclosed herein provides a benefit to this art by providing a means of supplying tackiness on ply surfaces during the manufacture of laminate structures. Heretofore, tackiness for laminate manufacture was dependent upon the tackiness of the as manufactured ply or prepreg. The poly was made in once location and subsequently combined with other plies at the point of laminate manufacture. This required a certain shelf life to each ply or prepreg to enable laminate manufacture or ply combination. As a consequence of this shelf life, plies which sat too long on the shelf could not be used for laminate manufacture. This invention has increased the commercial value of inventories of plies wherein the outdated shelf life has made the ply obsolete. This invention rejuvenates the surfaces of outdated plies and/or prepregs thus enabling therein use in the manufacture of laminates, whereas the prior art solution was to discard the outdated ply. The important result is that plies and/or prepregs as related to this invention are not constrained by shelf life for reasons of surface tackiness. This result enables manufacturing processes to be designed without the need to consider ply tackiness as a parameter. This has been a problem in this particular manufacturing art for some time, and has now been resolved by this disarmingly simple but significant addition to this art.

The following examples further illustrate the invention but are not intended to limit the invention specifically to the disclosure contained therein.

Example 1

A 30.5 cm wide continuous unidirectional thermoplastic toughened epoxy graphite tape manufactured at ICI Composited Inc., (FIBERITE HYE1577-1E grade 190 g/m2, 35% resin content) is sprayed with tacktifier with an air actuated atomising nozzle. A heated reservoir supplied to the nozzle an uncatalysed epoxy resin or tacktifier in the range of 500-1,000 centipoise viscosity at a rate of 25-100 milligrams per second. Fifteen grams per meter squared of epoxy (Ciba Giegy PY306) is applied to the epoxy graphite tape. The resulting material is then stored at 0°C.

Mechanical, analytical and shop trial testing were performed on EXAMPLE 1 material. Tests performed included determination of resin content, fibre areal weight, tack, compression after impact, room temperature tensile strength and modulus, room temperature 82°C and 82°C/wet compression strength, and glass transition temperature.

Example 2

A 7.6 cm and 30.5 cm wide continuous unidirectional thermoplastic toughened epoxy graphite tape manufactured at ICI Composites Inc. (Fiberite HYE 1577-IE, HYE 1377-IT) is sprayed with PY306 in a similar manner to EXAMPLE 1, except that two grams per metered squared of the tacktifier are applied. The resulting material is stored at 0°C.

Mechanical, analytical and handleability tests were performed on EXAMPLE 2 material. Mechanical and analytical tests are mentioned in EXAMPLE 1. Handleability tests consisted of automatic tape laying trials defined below.

Example 3

A 76.2 cm wide continuous graphite woven fabric impregnated with epoxy resin (FIBERITE R HMF 133/7740) which had exceeded its shelf life due to excessive shelf life is sprayed with the PY306 tacktifier. 22.9, 40, 57 and 120 g/m2 of the tacktifier is applied to four sample rolls.

Analytical tests were performed to determine fibre areal weight and resin content. Tests to determine the mechanical properties mentioned in EXAMPLES 1 and 2 with the exception of compression after impact will be performed.

### Example 4

A 30.5 cm wide continuous unidirectional thermoplastic toughened epoxy graphite tape manufactured at ICI Composites Inc. (Fiberite HYE 1377-2T grade 145 g/m2, 35% resin content) is sprayed with PY306 in a similar manner to EXAMPLES 1, 2 and 3. 3 and 7 g/m2 is applied.

### Test Methods

### Fibre Area Weight/Resin Content

Resin content and fibre areal weight determinations are made by extracting the resin with dimethyl formamide from the fibres. 10.2 cm x 10.2 cm samples were weighed then soaked in the solvent which is heated and/or ultrasonically agitated. After extraction the fibres were filtered from the dissolved resin/solvent liquid and weighted. Fibre areal weight can be weighed directly while resin content was derived from starting sample weight and dry fibre weights.

### Tack

Tack determinations are made by applying 7.6 cm x 2.5 cm prepreg samples of specific dimensions to a vertical plate. Specimens which adhere to the plate for 30 minutes satisfy tack requirements. Tack level grades between I-VI can be assigned based on qualitative descriptions of the material.

All mechanical test methods (glass transition temperature included) have been performed per Boeing specification BMS-8276.

### Automatic Tape Laying Manufacture

An automatic type laying machine ("ATL") combines plies of prepreg tape into laminate structures. The tape layer comprises a 6 x 6 x 15 meter gantry. The tape laying head is mounted in the gantry. A base or tool is positioned in the gantry to enable the prepreg or ply lamination. The prepreg width is variable from 7.6 cm to 15.2 cm. A motorised multi-axis head is mounted in the gantry with x-y-z freedom of movement. Prepreg tape rolls are mounted on the head and made to contact the tool. The computer controlled head is programmed to lay plies on the tools surface with subsequent layers of plies added. The tool can be any size of shape, limited by the ATL size and shape, but are most commonly a meter wide by a meter long. Laminates manufactured with an ATL machine are those typically to difficult to fabricate by hand.

The ATL prototypes manufactured by the present invention comprises laying out or depositing 7.6 cm wide prepreg on a flat and contoured tool. The speed of deposition was 30 meters of tape lay out per minute. The prepreg was allowed to sit at room temperature for ten days prior to lamination. To successfully pass as a laminar ply the prepreg must adhere to both the tool and to other plies.

### Results

Coating prepregs with about 3 to 15 grams per meter squared of PY306, the tacktifier, on the prepreg surface successfully enriched the surface to enable tool and ply adherence. The final laminate exhibited no significant decrease in chemical and/or mechanical properties.

Several rolls of prepreg which had exceeded its useful shelf-life were sprayed with about 22.9 to 120 grams per meter squared of PY306. The prepreg material was rejuvenated from unacceptable tack surface to enable successful laminate manufacture. Between about 3 and 7 grams of PY306 sprayed on HYE 1377-2T, EXAMPLE 4, enabled adherence to a large vertical tool. Non enhanced prepreg would not adhere to the tool.

The Table exhibits the mechanical and analytical data for the control sample and samples from the inventive EXAMPLES 1 and 2. Within the limits of experimental error there is no significant difference in the comparative data.

### TABLE

| | Control | Example 1 | Example 2 |
|---|---|---|---|
| Fibre Areal Weight grams/meter sq | 190.3 | 189.48 | 186.88 |
| Resin content (%) | 33.6 | 34.8 | 34.1 |
| Tack | -- | Pass | Pass |
| Compression after impact (KSI) | 45.7 | 45.8 | 47.7 |
| **Compression Strength (KSI)** | | | |
| Room Temp. | 230 | 222 | 233 |
| 82°C | 181 | 195 | 195 |
| 82°C/Wet | 163 | 178 | 167 |
| **Compression Modulus** | | | |
| Room Temp. | 20.4 | TBD | 20.9 |
| **Open Hole Compression** | | | |
| Room Temp. | 46.5 | -- | 46.6 |
| 82°C | 40.4 | -- | 41.5 |
| 82°C/Wet | 37.6 | -- | 38.1 |
| **Glass Transition** | | | |
| Flex (c) | 71 | 66 | 69 |
| DMA (c) | 83 | 83 | 82 |

**Claims**

1. An intermediate structure wherein the structure surface is enriched with a tacktifier.

2. An intermediate structure according to claim 1 wherein said structure comprises phenolics, epoxies, arcylics, cyanates, imides, methacrylates, esters, and combinations thereof and/or therebetween.

3. An intermediate structure according to claim 1 or claim 2 wherein said tacktifier comprises a thermoset resin.

4. An intermediate structure according to any one of the preceding claims wherein said tacktifier consists essentially of phenolic, epoxy, and/or some combination thereof.

5. An intermediate structure according to any one of the preceding claims wherein said tacktifier consists of epoxy.

6. An intermediate structure according to any one of the preceding claims wherein said structure consisting essentiallY of additives selected from the group consisting of chopped and/or continuous fibres, fabrics, whiskers and combinations thereof and/or therebetween.

7. An intermediate structure according to any one of the preceding claims wherein said structure consists essentially of additives selected from the group consisting of thermoplastics, glass, ceramics and combinations thereof and/or therebetween.

8. An intermediate structure according to any one of the preceding claims wherein said structure is a prepreg.

9. An intermediate structure according to any one of the preceidng claims wherein said structure is a single and/or a plurality of plies.

10. An intermediate structure according to any one of the preceding claims wherein the viscosity of said tacktifier is from about 500 to 1000 centipoise.

11. An intermediate structure according to any one of the preceding claims wherein said tacktifier combines with said structure within the first two hundred angstroms of the surface.

12. An intermediate structure according to any one of the preceding claims wherein the shelf life is greater than 5 days.

13. An intermediate structure wherein said structure is modified by the application of a tacktifier to surfaces of said structure wherein said modification comprises the process of
a) providing said intermediate structure as a substrate;
b) providing a means for the application of said tacktifier;
c) transferring said tacktifier on the surface of said substrate whereby said tacktifier adheres to said substrate.

14. A process according to claim 13 wherein said transfer comprises spraying said tacktifier on said surfaces.

15. A process according to claim 13 wherein said transfer is a wet spray.

16. A process according to claim 13 wherein said transfer is by transfer coating.

17. A process according to any one of claims 13 to 16 wherein said transfer is to a single surface.

18. A process according to any one of claims 13 to 17 wherein said substrate is a prepreg.

19. A process according to any one of claims 13 to 18 wherein said substrate is a single and/or a plurality of plies.

20. A process according to any one of claims 13 to 19 wherein said tacktifier is epoxy.

21. A process according to any one of claims 13 to 20 wherein said transferring is in-line with a laminate manufacturing process.

**European Patent Office**

# EUROPEAN SEARCH REPORT

Application Number

EP 92 30 6055
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 157 779 (HOUILLÈRES DU BASSIN DU NORD ET DU PAS-DE-CALAIS) * the whole document * | 1-3,7-9, 11-13,18 | C08J5/12 C08J5/24 |
| X | FR-A-2 348 955 (INVENTA AG) * page 1, line 8 - page 4, line 1 * * claims 1-9 * | 1-6,8,9, 12,13, 16-20 | |
| X | EP-A-0 286 943 (STAC SRL) * column 5, line 3 - line 44 * * examples * * claims 1,8-10 * | 1-9,13, 16-20 | |
| X | EP-A-0 434 013 (MITSUBISHI PETROCHEMICAL CO. LTD.) * page 5, line 50 - page 6, line 9 * * examples 1-6 * * claim 1 * | 1-6,9, 13,16-20 | |
| X | AT-A-371 491 (ISOSPORT VERBUNDTEILE GMBH) * the whole document * | 1-7,9, 13,16, 17,19,20 | TECHNICAL FIELDS SEARCHED (Int. Cl.5) C08J B05D C09D B32B |
| X | DATABASE WPIL Week 5186, Derwent Publications Ltd., London, GB; AN 86-336208 & JP-A-61 252 284 (NITTO ELECTRIC IND. KK.) 10 November 1986 * abstract * | 1-5,8,9, 13,16-20 | |

-/--

The present search report has been drawn up for all claims

| Place of search | Date of completion of the search | Examiner |
|---|---|---|
| THE HAGUE | 06 OCTOBER 1992 | BETTELS B.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

## EUROPEAN SEARCH REPORT

**Application Number**

EP 92 30 6055

Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPIL<br>Week 1782,<br>Derwent Publications Ltd., London, GB;<br>AN 82-33866E<br>& JP-A-57 047 372 (NITTO ELECTRIC IND. KK.) 18 March 1982<br>* abstract *<br><br>----- | 1,13 | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 06 OCTOBER 1992 | BETTELS B.R. |

EPO FORM 1503 03.82 (P0401)